# NEUE EUROPÄISCHE PATENTSCHRIFT

(11) **EP 1 574 880 B2**
(45) Veröffentlichungstag und Bekanntmachung des Hinweises auf die Entscheidung über den Einspruch: **06.12.2017**
(45) Hinweis auf die Patenterteilung: 23.08.2006
(21) Anmeldenummer: 05003820.7
(22) Anmeldetag: 23.02.2005
(51) Int. Cl.: G01V 8/10

(54) **Sendeelement für Lichtschranken, Lichtgitter und dergleichen**
Emitter for light barrier, light curtain or similar
Émetteur pour barrière lumineuse, rideau optique ou équivalent

(30) Priorität: 11.03.2004 DE 102004011911
(43) Veröffentlichungstag der Anmeldung: 14.09.2005
(73) Patentinhaber: SICK AG, 79183 Waldkirch (DE)
(72) Erfinder: Wüstenfeld, Martin, 79350 Sexau (DE)
(74) Vertreter: Ludewigt, Christoph

(56) Entgegenhaltungen:
- EP-A1- 1 383 175
- DE-A1- 10 302 007
- DE-A1- 19 608 391
- DE-A1- 19 733 996
- Datenblatt der Firma Fietje Sensor & Optoelektronik GmbH vom März 2003
- Datenblatt der Firma Osram vom 1. Juni 1999
- Datenblatt der Firma Siemens vom 1. November 1997
- Datenblatt der Firma Toshiba vom 4. April 2002
- Konvolut zu "cegard/Object 100" bzw. "Object100 OEM-Sstem".
- Spezifikation zu LEDs TSML 1xxx

## Beschreibung

Die Erfindung betrifft ein Sendeelement für Lichtschranken, Lichtgitter und dergleichen gemäß dem Oberbegriff des Anspruchs 1.

Für Lichtschranken, Lichtgitter und dergleichen werden Sendeelemente verwendet, die einen gebündelten Lichtstrahl, insbesondere Infrarotlicht, aussenden, der auf ein zugeordnetes Empfängerelement auftrifft. Bei einer Lichtschranke können ein oder einige wenige Sendeelemente und zugeordnete Empfängerelemente vorgesehen sein. Bei einem Lichtgitter wird eine Vielzahl solcher Sendeelemente und Empfängerelemente in einer Leiste angeordnet.

Um einen gebündelten Lichtstrahl zu erzeugen, wird das von der Lichtquelle emittierte Licht mittels einer optischen Linse gebündelt. Dabei ist es insbesondere auch bekannt, als Lichtquelle Licht emittierende Dioden (LED) zu verwenden, die mit einer kuppenförmigen Linse oder einem integrierten Reflektor ausgebildet sind. Es ist auch bekannt, Laserdioden und insbesondere VCSEL-Dioden (Vertical Cavity Surface Emitting Laser-Dioden) zu verwenden, die eine Abstrahlcharakteristik mit begrenztem Abstrahlwinkel aufweisen. Sowohl LED-Lichtquellen mit integrierten optischen Einrichtungen als auch Laserdioden oder VCSEL-Dioden können jedoch in der Sicherheitstechnik nur bedingt eingesetzt werden. Der Hauptgrund ist dabei, dass die geforderten Grenzwinkel der Divergenz des Lichtstrahles nur unzureichend eingehalten werden können. Bei höheren Anforderungen, z. B. bei Lichtgittern der Sicherheitskategorie 4, mit einem absoluten Grenzwinkel < 5°, wird daher die aufwändige Kombination einer Lichtquelle mit einer zusätzlichen optischen Linse verwendet.

Aus der DE 103 02 007 A1 ist ein optischer Sensor mit einem Sendelichtstrahlen emittierenden Sender und einem Empfangslichtstrahlen empfangenden Empfänger bekannt. Der Sender und/oder Empfänger ist bzw. sind wenigstens von einem optischen Bauelement gebildet, wobei das optische Bauelement auf dem Boden eines isolierenden Gehäuses aufsitzt, dessen Seitenwände das optische Bauelement seitlich optisch abschirmen. Das Gehäuse weist einen Deckel auf mit wenigstens einem lichtdurchlässigen Segment. Der Deckel kann dabei aus einer Glasscheibe mit darauf aufgebrachten Blendenschichten bestehen.

Aus der DE 196 08 391 A1 ist ein Reflexsensor mit einem Trägerkörper und einer optoelektronischen Einheit aus Sendeeinheit und Empfangseinheit bekannt die eine Vielzahl von auf der Oberseite des Trägerkörpers aufgebrachte optoelektronische Halbleiterbauelemente aufweist. Auf der Oberseite des Trägerkörpers und der Oberseite der optoelektronischen Einheit ist ein optisches Gitter angeordnet, dessen Öffnungen an die Form der optoelektronischen Halbleiterbauelemente angepasst sind.

Der Erfindung liegt die Aufgabe zugrunde, ein preisgünstiges Sendeelement für Lichtschranken, Lichtgitter und dergleichen zu schaffen, das auch höhere Anforderungen an die Einhaltung von Grenzwinkeln der Divergenz erfüllen kann.

Diese Aufgabe wird erfindungsgemäß durch ein Sendeelement mit den Merkmalen des Anspruchs 1 gelöst.

Vorteilhafte Ausführungen und Weiterbildungen der Erfindung sind in den Unteransprüchen angegeben.

Der wesentliche Gedanke der Erfindung besteht darin, eine Lichtquelle mit kleinen linearen Abmessungen der Licht emittierenden Fläche zu verwenden und vor dieser Licht emittierenden Fläche eine Lochblende mit kleinem Durchmesser anzubringen. Die linearen Abmessungen der Öffnung der Lochblende sind dabei insbesondere < 3 mm. Diese Lochblende wird in einem Abstand vor der emittierenden Fläche angeordnet, der mindestens 5 mm beträgt.

Die Begrenzung der Divergenz des von dem Sendeelement emittierten Lichtes erfolgt im Wesentlichen durch die Geometrie, d. h. durch den kleinen Durchmesser der Lochblende und deren Abstand von der Licht emittierenden Fläche. Dabei ist es notwendig, die Abmessungen der Licht emittierenden Fläche klein zu wählen, da größere Abmessungen der emittierenden Fläche die Strahldivergenz vergrößern würden. Die in der Regel störende Beugung an einer kleinen Lochblende stellt sich in der Erfindung als Vorteil dar, da in diesem Fall die Beugung des Lichtes an der kleinen Lochblende zu einer gleichmäßigen Ausleuchtung im Fernbereich des Lichtstrahles führt.

Für den Einsatz des Sendeelementes ist es zweckmäßig, wenn das Sendeelement an der Strahlaustrittsseite durch eine transparente Frontscheibe abgedeckt ist, die zum einen die Lichtquelle und zum anderen insbesondere auch die Lochblende vor Verschmutzung schützt. Da keine optische Abbildung durch Linsen vorgesehen ist, sind die Abstandsjustierungen in dem Sendeelement und zwischen Sendeelement und Empfängerelement wenig kritisch. Aufgrund der Tatsache, dass das Licht an der kleinen Lochblende gebeugt wird, tritt eine geringere Beeinträchtigung der Lichtdurchlässigkeit der Frontscheibe, z. B. durch Kratzer, Staub, Flusen und dergleichen, auf, so dass die Strahlqualität und die Ausleuchtung des Strahlquerschnitts am Ort des Empfängerelements weniger beeinträchtigt sind. Dabei ist es ebenfalls vorteilhaft, dass keine optische Abbildung vorgesehen ist, so dass Verschmutzungen der Frontscheibe nicht auf den Empfänger abgebildet werden.

Die linearen Abmessungen der emittierenden Fläche der Lichtquelle sind < 500 µm, wobei die emittierende Fläche beispielsweise ein Rechteck mit dieser Seitenlänge sein kann. Ein in der Divergenz schärfer begrenzter Strahl ergibt sich bei kleineren Abmessungen, die bspw. nur 400 µm oder vorzugsweise sogar weniger als 200 µm betragen. Kleinere Abmessungen setzen voraus, dass Lichtquellen ausreichender Leistung zur Verfügung stehen.

Die Lochblende ist vorzugsweise eine kreisförmige Blende, deren Öffnungsdurchmesser < 3 mm beträgt. Auch hier führt eine Verkleinerung des Durchmessers zu einer geringeren Divergenz des Strahles, wobei ein Durchmesser von etwa 1,5 mm vorteilhaft ist.

Auch der Abstand der Lochblende von der Licht emittierenden Fläche bestimmt die Strahldivergenz. Je größer dieser Abstand gewählt wird, umso kleiner wird die Strahldivergenz. Größere Abstände führen allerdings zu einer Verringerung der auf das Empfängerelement auftreffenden Lichtmenge und vergrößern die Bauabmessungen des Sendeelements in Strahlrichtung. Der Abstand sollte daher nicht größer als 40 mm sein. Zweckmäßig liegt der Abstand zwischen 10 mm und 30 mm, insbesondere bei etwa 20 mm.

Als Lichtquelle eignen sich insbesondere Halbleiterelemente. Wird als Lichtquelle eine LED verwendet, so ist das Ausblenden eines Lichtstrahles mittels der Lochblende mit einem starken Verlust an Lichtmenge verbunden. Es werden daher bevorzugt Laserdioden und insbesondere VCSEL-Dioden verwendet, die bereits eine gerichtete Abstrahlung aufweisen.

Die als Lichtquelle dienenden Halbleiterelemente sind vorzugsweise als Chip an einer Gehäusewand der Lichtschranke bzw. des Lichtgitters angebracht, so dass eine unmittelbare thermische Ankoppelung an das Gehäuse möglich ist. Dies ist von Vorteil, wenn Lichtquellen größerer Leistung eingesetzt werden. Die Chips können dabei insbesondere in Chip-on-board-Technik (COB) bzw. Chip-on-film-Technik (COF) eingesetzt werden.

In einer Weiterbildung der Erfindung ist eine weitere Lochblende zwischen der Lichtquelle und der ersten Lochblende angeordnet. Dadurch werden in einem Lichtgitter benachbarte Strahlen in einfacher Weise voneinander getrennt.

Aufgrund der geometrischen Begrenzung der Strahldivergenz eignet sich das erfindungsgemäße Sendeelement vorwiegend für Lichtschranken und Lichtgitter geringerer Reichweite von etwa bis zu 4 m.

Insgesamt wird mit der Erfindung ein Lichtgitter erhalten, das sehr preisgünstig herzustellen ist, weil u.a. auf eine optische Abbildung und die dafür notwendigen Elemente, wie Linsen und dergleichen, verzichtet ist. Dadurch ist das erfindungsgemäße System auch sehr positionsunempfindlich, also entsprechend leicht auszurichten.

Im Folgenden wird die Erfindung anhand der beigefügten Zeichnung näher erläutert. Es zeigen
- Fig. 1: schematisch den Aufbau des Sendeelements,
- Fig. 2: die Verteilung der Lichtintensität einer VCSEL-Diode nach dem Stand der Technik ohne Lochblende,
- Fig. 3: die Intensitätsverteilung des Lichtes des erfindungsgemäßen Sendeelements im Fernbereich,
- Fig. 4: den Einfluss von Störungen auf der Frontscheibe auf die Intensitätsverteilung des Lichtes im Fernbereich,

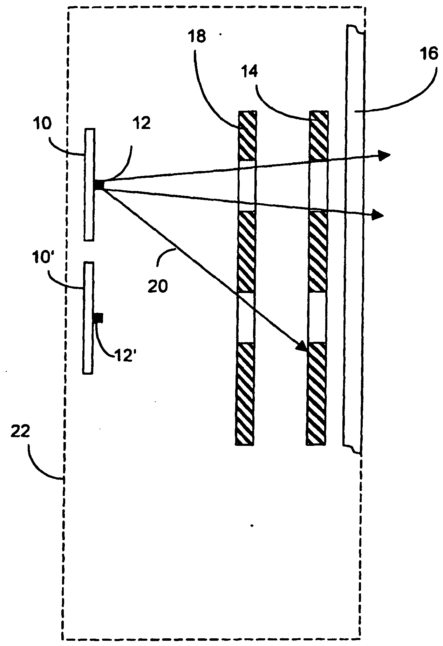

- Fig. 5: eine Ausführungsform des erfindungsgemäßen Sendeelements in einer Lichtgitteranwendung.

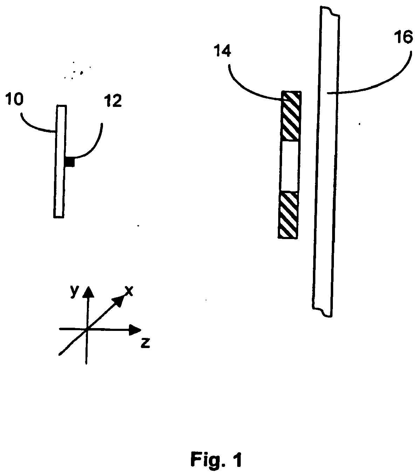

In Fig. 1 ist der schematische Aufbau des Sendeelements dargestellt. Auf einem Chip 10 ist als Lichtquelle 12 ein Licht emittierendes Halbleiterelement angebracht, insbesondere eine VCSEL-Diode. Die Licht emittierende Fläche dieser Lichtquelle 12 hat die Form eines Rechteckes mit Seitenlängen < 500 µm. In der Abstrahlrichtung (Z-Achse) der die Lichtquelle 12 bildenden VCSEL-Diode ist in einem Abstand von wenigstens 5 mm eine Lochblende 14 angeordnet. Die Lochblende 14 weist eine Durchtrittsöffnung mit kreisförmigem Querschnitt und einem Durchmesser < 3 mm auf. In Strahlaustrittsrichtung wird das Sendeelement durch eine vor der Lochblende 14 angeordnete durchsichtige Frontscheibe 16 abgedeckt.

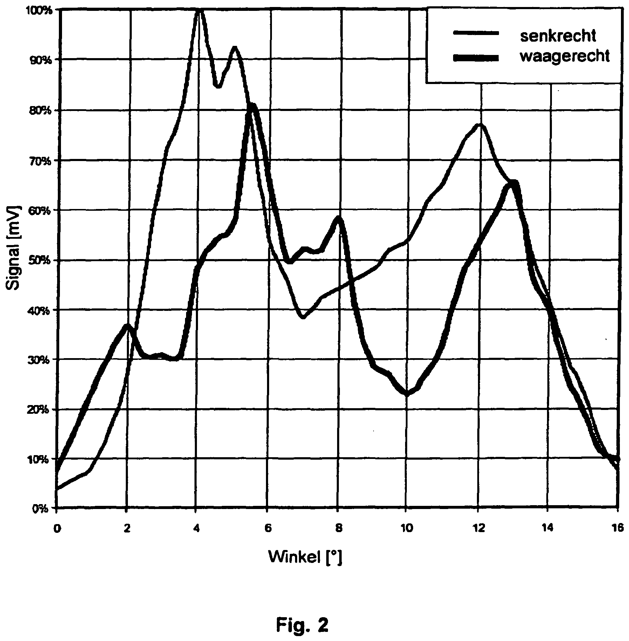

In Fig. 2 ist die Winkelverteilung der relativen Lichtintensität der als Lichtquelle 12 dienenden VCSEL-Diode in einem Abstand von 3 m von der Lichtquelle 12 dargestellt. Dabei ist die Verteilung über den Durchmesser des Lichtstrahles in der senkrechten Richtung (Y-Achse in Fig. 1) und in der waagerechten Richtung (X-Achse in Fig. 1) aufgetragen. Es ist eine Winkeldivergenz des Strahles von ±8° und eine ungleichmäßige Ausleuchtung zu erkennen.

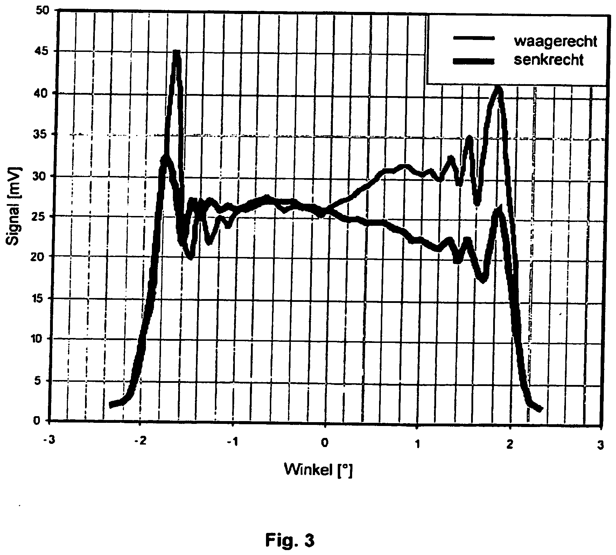

Fig. 3 zeigt entsprechend die Intensitätsverteilung des Lichtstrahles in 3 m Entfernung von derselben Lichtquelle 12, jedoch mit einer Lochblende 14, die eine kreisförmige Öffnung mit einem Durchmesser von 1,5 mm aufweist und in einem Abstand von 20 mm vor der Lichtquelle 12 angeordnet ist. Es ist ohne Weiteres ersichtlich, dass die Strahldivergenz wesentlich geringer ist und nur noch ±2° beträgt. Weiter ist erkennbar, dass in Folge der Beugung des Lichtes an den Rändern der Lochblende 14 die Intensitätsverteilung wesentlich gleichmäßiger ist, d. h. die Fläche eines Empfängerelementes gleichmäßiger ausgeleuchtet wird.

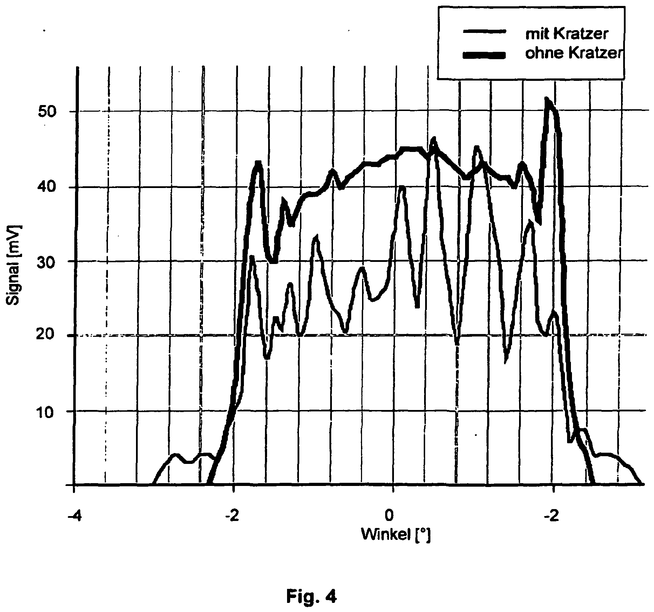

In Fig. 4 ist der Einfluss von Störungen auf der Frontscheibe 16 für dasselbe Sendeelement dargestellt, mit welchem die Messkurve der Fig. 3 aufgenommen wurde.

In Fig. 4 ist die winkelabhängige Intensitätsverteilung des Lichtes in einer Entfernung von 3 m dargestellt, wobei die dick ausgezogene Kurve mit einer unbeschädigten Frontscheibe 16 aufgenommen wurde, während die dünn ausgezogene Kurve mit einer Frontscheibe 16 aufgenommen wurde, die stark verkratzt war. Es ergibt sich durch die Kratzer und Beschädigung der Frontscheibe 16 zwar eine Reduzierung der Lichtintensität, die Strahldivergenz ist jedoch nahezu unverändert und auch die Winkelverteilung der Lichtintensität ist nur geringfügig beeinträchtigt.

In einer weiteren Ausführungsform der Erfindung ist in einer Senderleiste 22 eines Lichtgitters zwischen jeder Lichtquelle 12 bzw. 12' und jeder Lochblende 14 eine weitere Lochblende 18 angeordnet, deren Löcher mit denen der Lochblende 14 fluchten. Die weitere Lochblende 18 hat den Zweck, dass benachbarte Lichtsender 12' nicht durch ein und dasselbe Loch der Lochblende 14 senden können, so dass benachbarte Strahlen voneinander getrennt werden und nur gerichtete Lichtstrahlen die Sendeleiste verlassen können, wie dies durch den Strahl 20 dargestellt ist, der von der Lochblende 14 in gewünschter Weise abgeblockt wird.

## Patentansprüche

1. Sendeelement für Lichtschranken, Lichtgitter und dergleichen mit einer Lichtquelle und einer das von der Lichtquelle emittierte Licht bündelnden optischen Einrichtung, **dadurch gekennzeichnet, dass** die linearen Abmessungen der Licht emittierenden Fläche der Lichtquelle (12) kleiner als 500 µm sind, dass die optische Einrichtung eine erste Lochblende (14) aufweist, deren lineare Öffnungsabmessungen kleiner als 3 mm sind, und dass der Abstand der ersten Lochblende (14) von der emittierenden Fläche in Strahlrichtung mindestens 5 mm beträgt.

2. Sendeelement nach Anspruch 1, **dadurch gekennzeichnet, dass** der Abtand der ersten Lochblende (14) von der emittierenden Fläche der Lichtquelle (12) kleiner als 40 mm ist.

3. Sendeelement nach Anspruch 2, **dadurch gekennzeichnet, dass** der Abstand der ersten Lochblende (14) von der emittierenden Fläche zwischen 10 mm und 30 mm, insbesondere etwa 20 mm, beträgt.

4. Sendeelement nach einem der Ansprüche 1-3, **dadurch gekennzeichnet, dass** die erste Lochblende (14) eine kreisrunde Öffnung mit einem Durchmesser kleiner als 3 mm aufweist.

5. Sendeelement nach Anspruch 4, **dadurch gekennzeichnet, dass** der Durchmesser der Öffnung der ersten Lochblende (14) etwa 1,5 mm beträgt.

6. Sendeelement nach einem der Ansprüche 1-5, **dadurch gekennzeichnet, dass** die Licht emittierende Fläche der Lichtquelle (12) lineare Abmessungen kleiner als 400 µm und vorzugsweise kleiner als 200 µm aufweist.

7. Sendeelement nach einem der vorhergehenden Ansprüche, **dadurch gekennzeichnet, dass** die Lichtquelle (12) ein Halbleiterelement ist.

8. Sendeelement nach Anspruch 7, **dadurch gekennzeichnet, dass** die Lichtquelle (12) eine LED oder eine Laserdiode, insbesondere eine VCSEL-Diode ist.

9. Sendeelement nach Anspruch 7 oder 8 **dadurch gekennzeichnet, dass** das Halbleiterelement der Lichtquelle (12) als Chip (10) an einer Gehäusewand des Sendeelementes und/oder in COB- oder COF-Technik angeordnet ist.

10. Sendeelement nach einem der vorhergehenden Ansprüche, **dadurch gekennzeichnet, dass** die Lichtquelle (12) und die erste Lochblende (14) strahlaustrittsseitig durch eine lichtdurchlässige Frontscheibe (16) abgedeckt sind.

11. Sendeelement nach einem der vorhergehenden Ansprüche, **dadurch gekennzeichnet, dass** eine weitere Lochblende (18) zwischen der Lichtquelle (12) und der ersten Lochblende (14) angeordnet ist.

12. Lichtgitter mit Sendeelementen nach einem der vorhergehenden Ansprüche.

## Claims

1. Transmitting element for light barriers, light gratings and the like, said element having a light source and an optical device which focuses the light emitted by the light source, **characterized in that** the linear dimensions of the light-emitting area of the light source (12) are less than 500 µm, **in that** the optical device has a first aperture plate (14) whose linear opening dimensions are less than 3 mm, and **in that** the distance between the first aperture plate (14) and the emitting area is at least 5 mm in the beam direction.

2. Transmitting element according to Claim 1, **characterized in that** the distance between the first aperture plate (14) and the emitting area of the light source (12) is less than 40 mm.

3. Transmitting element according to Claim 2, **characterized in that** the distance between the first aperture plate (14) and the emitting area is between 10 mm and 30 mm, in particular approximately 20 mm.

4. Transmitting element according to one of Claims 1-3, **characterized in that** the first aperture plate (14) has a circular opening having a diameter of less than 3 mm.

5. Transmitting element according to Claim 4, **characterized in that** the diameter of the opening of the first aperture plate (14) is approximately 1.5 mm.

6. Transmitting element according to one of Claims 1-5, **characterized in that** the light-emitting area of the light source (12) has linear dimensions of less than 400 µm and preferably less than 200 µm.

7. Transmitting element according to one of the preceding claims, **characterized in that** the light source (12) is a semiconductor element.

8. Transmitting element according to Claim 7, **characterized in that** the light source (12) is an LED or a laser diode, in particular a VCSEL diode.

9. Transmitting element according to Claim 7 or 8, **characterized in that** the semiconductor element of the light source (12) is arranged as a chip (10) on a housing wall of the transmitting element and/or is arranged using COB or COF technology.

10. Transmitting element according to one of the preceding claims, **characterized in that** the light source (12) and the first aperture plate (14) are covered by a transparent front plate (16) on the beam exit side.

11. Transmitting element according to one of the preceding claims, **characterized in that** a further aperture plate (18) is arranged between the light source (12) and the first aperture plate (14).

12. Light grating having transmitting elements according to one of the preceding claims.

## Revendications

1. Elément émetteur pour barrages photoélectriques, rideaux optiques et analogues, comportant une source lumineuse et un dispositif optique focalisant la lumière émise par la source lumineuse, **caractérisé en ce que** les dimensions linéaires de la surface émettant de la lumière de la source lumineuse (12) sont inférieures à 500 µm, **en ce que** le dispositif optique est doté d'un premier diaphragme (14) dont les dimensions linéaires d'ouverture sont inférieures à 3 mm, et **en ce que** l'écartement du premier diaphragme (14) par rapport à la surface d'émission est au moins de 5 mm dans la direction du rayonnement.

2. Elément émetteur selon la revendication 1, **caractérisé en ce que** l'écartement du premier diaphragme (14) par rapport à la surface d'émission de la source lumineuse (12) est inférieur à 40 mm.

3. Elément émetteur selon la revendication 2, **caractérisé en ce que** l'écartement du premier diaphragme (14) par rapport à la surface d'émission est compris entre 10 mm et 30 mm, et est notamment de l'ordre de 20 mm.

4. Elément émetteur selon l'une des revendications 1 à 3, **caractérisé en ce que** le premier diaphragme (14) comporte une ouverture circulaire d'un diamètre inférieur à 3 mm.

5. Elément émetteur selon la revendication 4, **caractérisé en ce que** le diamètre de l'ouverture du premier diaphragme (14) est de l'ordre de 1,5 mm.

6. Elément émetteur selon l'une des revendications 1 à 5, **caractérisé en ce que** les dimensions linéaires de la surface émettant de la lumière de la source lumineuse (12) sont inférieures à 400 µm, et de préférence inférieures à 200 µm.

7. Elément émetteur selon l'une des revendications précédentes, **caractérisé en ce que** la source lumineuse (12) est un élément semi-conducteur.

8. Elément émetteur selon la revendication 7, **caractérisé en ce que** la source lumineuse (12) est une LED (pour Light-Emitting Diode) ou une diode laser, notamment une diode VCSEL (pour Vertical Cavity Surface Emitting Laser).

9. Elément émetteur selon la revendication 7 ou 8, **caractérisé en ce que** l'élément semi-conducteur de la source lumineuse (12) est disposé en tant que puce (10) sur une paroi de boîtier de l'élément émetteur et/ou en technique COB (pour Chip-On-Board) ou COF (pour Chip-On-Film).

10. Elément émetteur selon l'une des revendications précédentes, **caractérisé en ce que,** du côté de la sortie du faisceau lumineux, la source lumineuse (12) et le premier diaphragme (14) sont recouverts d'une plaque frontale transparente (16).

11. Elément émetteur selon l'une des revendications précédentes, **caractérisé en ce qu'**un autre diaphragme (18) est disposé entre la source lumineuse (12) et le premier diaphragme (14).

12. Rideau optique comportant des éléments émetteurs selon l'une des revendications précédentes.
